# EUROPEAN PATENT APPLICATION

(11) **EP 1 798 718 A2**
(43) Date of publication of application: **20.06.2007**
(21) Application number: 06253893.9
(22) Date of filing: 25.07.2006
(51) Int. Cl.: G09G 5/00, G09G 5/02

(54) **Method and apparatus for calibrating a color display panel and related manufacturing and service method**

(30) Priority: 14.12.2005 US 300232
(71) Applicant: Syntax Brillian Corp., Tempe AZ 85281 (US)
(72) Inventor: Miller, Samuel, Chino Hills, CA 91709 (US)
(74) Representative: Kenrick, Mark Lloyd

(57) **Abstract**

A display device is disclosed, in which calibration information for the display panel is stored in a memory separate from an image processor that controls the display panel. The image processor, which receives input signals and generates control signals to control the display panel, performs various calibration functions using calibration information stored in the memory. Such a structure avoids the loss of calibration information when the image processor fails, so the device may be repaired by replacing the image processor only. It also makes it more practical and less costly to perform color calibration for individual panels during manufacturing without significantly altering the product assembly process. A method for manufacturing display devices includes calibrating each individual display panel and storing the calibration information in the associated memory device before assembling the panels with other components of the display devices.

## Description

### BACKGROUND OF THE INVENTION

### Field of the Invention

This invention relates to color display devices, and in particular, it relates to calibration of color display panels and related method of manufacturing and service.

### Description of the Related Art

Color display panels such as liquid crystal displays (LCD), plasma screens and the like are used in a variety of applications such as televisions, computer monitors, digital cameras, mobile phones, personal digital assistant devices, etc. Such display panels, which have individual display pixels controlled by drive signals, are typically controlled by image processors which generate drive signals for the panels based on input image signals. An image processor may perform a variety of control functions such as interpolation, gamma correction, color correction, and other adjustments. In conventional devices, calibration information used by the image processor to perform various corrections is stored in the image processor itself. One form of calibration may be, for example, a lookup table that maps input R, G, B values from an image source to output R, G, B values used to drive the display pixels.

### SUMMARY OF THE INVENTION

The present invention is directed to a display device and method of manufacture that substantially obviate one or more of the problems due to limitations and disadvantages of the related art.

An object of the present invention is to provide a display device that stores calibration information independently of the image processor.

Another object of the present invention is to provide a manufacturing method that allows for sophisticated color calibration measurements to be performed for each individual panel without significantly altering existing manufacturing process and equipment.

Additional features and advantages of the invention will be set forth in the descriptions that follow and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, the present invention provides a display device including a display panel, a memory device for storing calibration information, and an image processor connected to the memory device and the display panel, the image processor receiving input signals and generating control signals to control the display panel using calibration information stored in the memory device, wherein the memory device is separate from internal memories of the processor.

In another aspect, the present invention provides a method for manufacturing a display device, including the steps of obtaining a display panel and a memory device, conducting calibration measurements of the display panel to generate calibration information, and storing the calibration information in the memory device.

In yet another aspect, the present invention provides a method of servicing a display device, the display device including a display panel, a memory device for storing calibration information, and an image processor connected to the memory device and the display panel for controlling the display panel using calibration information stored in the memory device, the memory device being separate from internal memories of the processor, the method comprising replacing the image processor without replacing the memory device.

It is to be understood that both the foregoing general description and the following detailed description are exemplary and explanatory and are intended to provide further explanation of the invention as claimed.

### BRIEF DESCRIPTION OF THE DRAWINGS

Figure 1 schematically illustrates a display device according to an embodiment of the present invention.
Figure 2 illustrates a calibration measurement process according to an embodiment of the present invention.
Figure 3 illustrates a manufacturing process for a display device according to another embodiment of the present invention.

### DETAILED DESCRIPTION OF THE PREFERRED EMBODIMENTS

In a display device, various corrections may be applied to the image signal by the image processor to generate higher quality images. Some of the corrections, such as the gamma curve and color temperature of the panel, are dependent on the type and design of the display panel. For these factors, the same corrections can be used in all individual devices of the same type and design. For example, the native cover temperature of LCD panels is about 10,000 to 15,000 degrees, while the color temperature for CRT screens for televisions is about 6500 degrees in most of the world. Correction may be performed to adjust the color temperature of an LCD panel to more closely match that of a CRT screen. Some other corrections, on the other hand, are dependent on characteristics of the individual panel, often resulting from factors in the manufacturing process that cannot be completely controlled. In a color LCD panel, for example, the colors of the inks used to print the color filter array in the LCD may vary from batch to batch; the color filter may be slightly misaligned with respect to the pixel array of the LCD, potentially causing leakage of color. These individual characteristics may be measured for each panel to obtain individual calibration information and used by the image processor to perform appropriate corrections for that panel. In conventional display devices, calibration information is stored in the image processor. A disadvantage of such a system is that if the image processor fails and needs to be replaced, the calibration information is lost. Thus, if the stored calibration information includes individual calibration information, that display panel must be re-measured to obtain the individual calibration information again. Such measurements are often cumbersome and costly. Accordingly, the present invention provides a display device where calibration information is stored in a memory separate from the memory of the image processor.

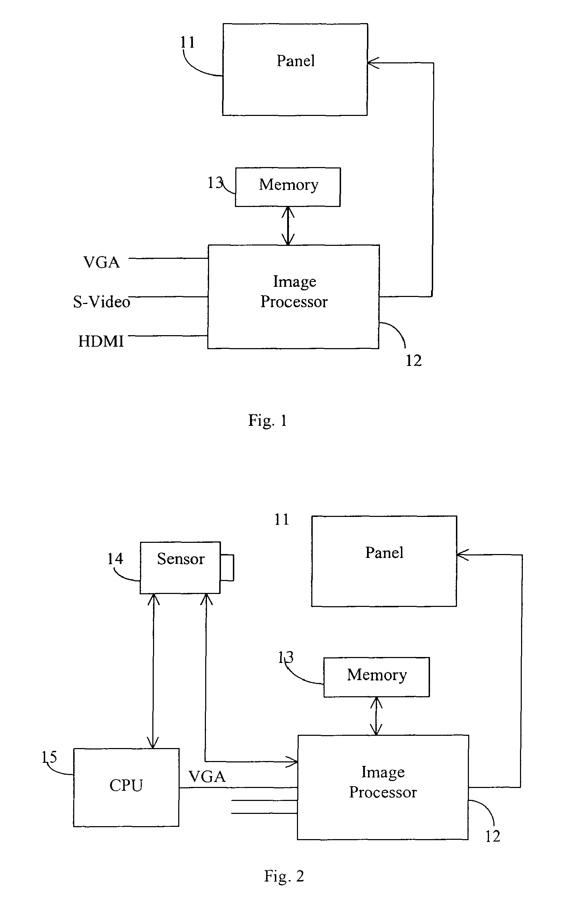

A display device according to embodiments of the present invention is shown in Fig. 1. The display device includes a color display panel 11, an image processor 12 connected to various input sources, and a memory 13 for storing calibration information. Other components of the display device are not pertinent to the present invention and are omitted her. The memory 13 is separated from the memory internal to the image processor 12, and is preferably physically associated with the panel 11. It may be integrated with the panel, or formed on a separate chip attached to the panel. Alternatively, the memory 13 may be located elsewhere in the display device, or even on the processor board, so long as it is not a part of the image processor 12 itself. The calibration information preferably includes both information regarding characteristics common to a type and design of the panel (common calibration information) and information specific to the individual panel 11 (individual calibration information). Alternatively, common calibration information may be stored in the processor 12 and individual calibration information stored in the memory 13. The image processor 12 performs control functions using the calibration information stored in the memory 13 and/or in the processor itself.

Individual calibration information is obtained in a calibration process illustrated in Fig. 2. During calibration, appropriate sensors 14 such as colorimeters, luminance meters, photo spectrometers, are used to measure the various properties of the panel 11, and a CPU 15 processes the data obtained by the sensors 14 to generate the calibration information. The calibration information is then stored in the memory 13. An image processor 12a controls the panel 11 during the calibration process. This image processor may be a part of the calibration equipment, or it may be the image processor that will ultimately be assembled with the panel 11 in a final product. The memory 13 is physically associated with the panel 11 and will follow the panel 11 into the final assembled product.

As an example, a calibration is carried out by displaying a series of "test" screens each generated by an input signal corresponding to a triplet of R, G, B values. For each input signal, an area of the screen (typically near the center of the screen) is measured with a colorimeter, and the result is converted to a triplet of output R, G, B values. Due to various factors, the output R, G, B values will likely deviate from those indicated by the input R, G, B values. The data (the input and the corresponding output R, G, B values) are processed to generate a lookup table, which can be used to convert input image signals to drive signals for the panel so that the correct optical signal level is displayed by the screen.

In the display device of Fig. 1, the control functions performed by the processor 12, including various corrections, may be those conventionally performed in color display devices or control and correction functions not performed by conventional display devices. An aspect of the present invention is the use of a separate memory to store calibration information (in particular, individual calibration information), which is useful in a display device regardless of the precise nature of the corrections being performed.

Storing calibration information in a memory 13 separate from the image processor 12 makes it more practical and less costly to perform certain color calibration for individual panels during the manufacturing process. Measuring color calibration information of a display panel often requires displaying special color patterns and measuring the light intensity of different color components as a function of the position on the panel. The measurements are conducted in a highly controlled environment where the ambient light and absorption characteristics of the enclosure are carefully controlled. In addition, the equipment used in the calibration measurements tends to be sophisticated and expensive. Thus, calibration measurements are best conducted in a specially constructed and equipped darkroom which may or may not be located near the assembly line. For this reason, it is more desirable to perform calibration measurement early in the assembly process, preferably before the panel is assemble with other components of the ultimate product (TV, computer, etc.). In conventional assembly processes and assembly lines, by the time the image processor is assemble with the panel, the partially assembled product has become bulky and awkward to handle for purpose of off-line color calibration measurements. Performing off-line calibration measurements at this stage also requires modifying the assembly process and the physical flow of the partially assembled products, as the partially assembled product would have to be transported to the location of the darkroom for the measurements and transported back to the assembly line. As a result of these difficulties, color calibration for individual panels are often not carried out at all in many products, leading to unsatisfactory color characteristics of the display devices. By using a separate memory physically associated with the panel to store calibration information, color calibration measurements can be performed at an early stage before the panel is assembled with many other components. It also avoids the need to modify the assembly line because the panel, having been calibrated and carrying the calibration information with it in the memory, can be assemble on a conventional assembly line without significant modification to the assembly process.

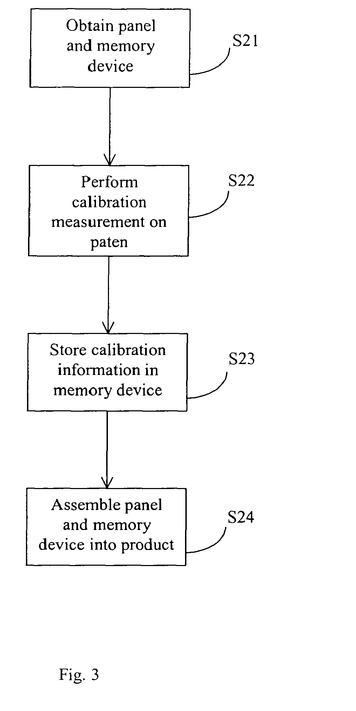

Thus, another aspect of the present invention is a method for manufacturing display devices that allows color calibration to be performed for individual display panels without significantly altering the product assembly process. As shown in Fig. 3, the method includes performing color calibration measurements for each individual display panel to generate calibration information (Step S21), storing the calibration information in a memory device physically associated with each display panel (Step S22), and assembling the display panels with other components of the display devices including the image processors (Step S23) to form the final product.

Storing calibration information in a memory 13 separate from the image processor 12 also makes it less time consuming and costly to service a malfunctioning or failed display device, either in a service facility or in the field or the consumer's home. One common reason for a device malfunction or failure is failure of the image processor. Since the calibration information is stored in a separate memory, the calibration is not lost. Therefore, repair can be done by replacing the image processor without having to re-calibrate the display device. This reduces the cost or service, and makes it possible to perform repair service at a consumer's home which would otherwise be impractical.

Although the above descriptions focus on color display panels, similar issues (i.e. the need to perform correction using individual calibration information) may exist for monochrome displays as well. Thus, the method and apparatus described above for color panels may also be used in monochrome displays.

It will be apparent to those skilled in the art that various modification and variations can be made in the display device and manufacturing method of the present invention without departing from the spirit or scope of the invention. Thus, it is intended that the present invention cover modifications and variations that come within the scope of the appended claims and their equivalents.

## Claims

1. A display device comprising:
a display panel;
a memory device for storing calibration information; and
an image processor connected to the memory device and the display panel, the image processor receiving input signals and generating control signals to control the display panel using calibration information stored in the memory device, wherein the memory device is separate from internal memories of the processor.

2. The device of claim 1, wherein the calibration information stored in the memory device includes individual calibration information specific to the display panel, the individual calibration information having been derived from calibration measurements performed for the display panel.

3. The device of claim 2, wherein the display panel is a color display panel and the individual calibration information includes color temperature information and gamma value information.

4. The device of claim 2, wherein the calibration information stored in the memory device further includes common calibration information not specific to the display panel.

5. The device of claim 1, wherein the memory device is physically associated with the display panel.

6. The device of claim 5, wherein the memory device is integrated with the display panel.

7. The device of claim 5, wherein the memory device is formed on a separate chip attached to the display panel.

8. A method of manufacturing a display device, comprising:
obtaining a display panel and a memory device;
conducting calibration measurements of the display panel to generate calibration information; and
storing the calibration information in the memory device.

9. The method of claim 8, further comprising assembling the display panel, the memory device and an image processor into the display device.

10. The method of claim 8, wherein the display panel is a color display panel and the calibration information includes color temperature information and gamma value information.

11. The method of claim 8, wherein the memory device is physically associated with the display panel.

12. The method of claim 11, wherein the memory device is integrated with the display panel.

13. The method of claim 12, wherein the memory device is formed on a separate chip attached to the display panel.

14. A method of servicing a display device, the display device including a display panel, a memory device for storing calibration information, and an image processor connected to the memory device and the display panel for controlling the display panel using calibration information stored in the memory device, the memory device being separate from internal memories of the processor, the method comprising:
replacing the image processor without replacing the memory device.
